# EUROPEAN PATENT APPLICATION

(11) **EP 1 489 118 A2**
(43) Date of publication of application: **22.12.2004**
(21) Application number: 04253659.9
(22) Date of filing: 18.06.2004
(51) Int. Cl.: C08G 18/00, C08J 11/22, C08J 11/24, C08J 11/26, C08J 11/28

(54) **Resin composition and manufacturing method thereof**

(30) Priority: 20.06.2003 JP 2003175867
(71) Applicant: Kabushiki Kaisha Toshiba, Tokyo 105-8001 (JP)
(72) Inventor: Fukaya, Taro c/o IP Division, Toshiba Corporation, Tokyo 105-8001 (JP); Thai, Cao Minh, IP Division, Toshiba Corporation, Tokyo 105-8001 (JP); Saya, Sioko, c/o IP Division, Toshiba Corporation, Tokyo 105-8001 (JP); Fujieda, Shinetsu, IP Division,Toshiba Corporation, Tokyo 105-8001 (JP)
(74) Representative: Maury, Richard Philip

(57) **Abstract**

The invention relates to a resin composition that has, as a raw material, a product that is obtained by addition reacting a compound having a unsaturated carbon bond to a resin decomposed product obtained by chemically decomposing a urethane resin, alternatively, by decomposing a urethane resin with a compound having a unsaturated carbon bond.
The resin composition can be solidified by polymerization by use of a cross-linking agent and an addition polymerization initiator. Furthermore, when a compound having two or more carboxyl groups or an anhydride thereof is blended together with the urethane resin decomposition, a resin composition can be obtained. When the resin composition obtained thereby is cured, a recycled resin with excellent properties can be obtained.

## Description

### CROSSREFERENCE TO RELATED APLICATION

This application is based upon and claims the benefit of priority from the prior Japanese Patent Application No.2003-175867, filed on June 20, 2003; the entire contents of which are incorporated herein by reference.

### FIELD OF THE INVENTION

The present invention relates to a recycling technology of a urethane resin, and more specifically, relates to a resin composition whose raw material is a decomposed product of a urethane resin and a manufacturing method thereof.

### DESCRIPTION OF THE BACKGROUND

A urethane resin is widely used as, for example, a heat insulation material of a refrigerator, a building material, and a cushioning material. Recently, a demand for recycling waste materials thereof increases, and reutilization of the waste materials thereof has been under study in each field. However, as the urethane resin is a thermosetting resin having a three-dimensional network structure, it is difficult to recycle it. Therefore, in the circumstances, these are processed according to landfill or incineration.

Various reports have been done from long ago on the methods of chemically decomposing a urethane resin. For example, a method of decomposing urethane foam by use of an amine compound such as alkanolamine and then recovering a decomposed product thereof separately to make it a chemical raw material is known (Japanese Patent Application Publication No. 42-10634). However, as separation between the amine compound and polyol that are excellent in the compatability each other is very difficult, this method is not commercially favourable.

Furthermore, various methods of obtaining a recycled resin by use of a decomposed product of a urethane resin have been known. For example, a method of decomposing polyurethane foam by use of polyol and amino ethanol as decomposing agent and reproducing it as an adhesive agent is known (Japanese Patent Application Laid Open (JP-A) No. 6-184513). However, as a batch system is used in the method, it takes 11 hr at a temperature of 190 degree centigrade and 2 hr even at a temperature of 230 degree centigrade. Therefore, the method is not suitable commercially. In addition, the method has a problem in that a decomposed product includes amine so much that a crystalline element due to amine is segregated. Furthermore, a method wherein a decomposed product of a urethane is blended with a raw material of urethane to recycle is proposed (JP-A No. 10-152578). Here, aromatic amine present in the decomposed product causes a problem. As such substances work as catalysts of a urethane and an epoxy resin and make it difficult to control a curing reaction of a resin composition using these, it is difficult to obtain a recycled resin with an excellent performance. In order to diminish aromatic amine that disturbs recycle of a resin, methods of diminishing aromatic amine by, for example, making alkylene oxide react with a urethane decomposed product (Japanese Patent No. 3242723), or by making isocyanate react with a urethane decomposed product (JP-A No. 11-158320) are known. However, as the former is a substance that is designated as a special ignitable substance, and the latter is a substance whose toxicity is stronger than that of aromatic amine and partly designated as a specified chemical substance, special design of apparatus is demanded in each case. It is indispensable to carry out a processing less expensively and conveniently in such a field as a recycle method of a resin, and therefore the above known methods are not practically applicable.

Still furthermore, heretofore, only methods of reproducing a decomposed product of a urethane resin as a raw material of an epoxy resin or a urethane resin have been known. With these methods alone, applications of the decomposed product are restricted, and it is difficult to consume decomposed products massively generated from the processing of the urethane resin. Therefore, it has been an obstacle to the recycling of a urethane resin wherein the urethane resin is decomposed and reproduced as a recycled resin.

### SUMMARY OF THE INVENTION

As is mentioned above, as a current method of decomposing and recycling a urethane has various kinds of problems, it has been very difficult to recycle the urethane. The invention has been achieved in view of such circumstances, and intends to provide a resin composition that can avoid a reaction in which an amine component contained in a decomposed product works as a catalyst and can conveniently manufacture a recycled resin excellent in performance and a manufacturing method thereof.

The invention came to completion when an idea that a method of decomposing a urethane resin is improved and as a reaction hardener compounded with a decomposed product generated, a specific one is adopted, the above problems can be solved is conceived.

A first one of the invention is a resin composition characterized by containing a reaction product that is obtained by addition-condensation of a compound having an unsaturated carbon bond to a resin decomposed product-obtained by chemically decomposing a urethane resin.

A second one of the invention is a resin composition characterized by containing a decomposed product obtained by decomposing a urethane resin by use of a decomposing agent having an unsaturated carbon bond in a molecule.

A third one of the invention is a resin composition characterized by blending a compound having two or more carboxyl groups or an anhydride thereof to a resin decomposed product obtained by decomposing a urethane resin.

### BRIEF DESCRIPTION OF THE DRAWINGS

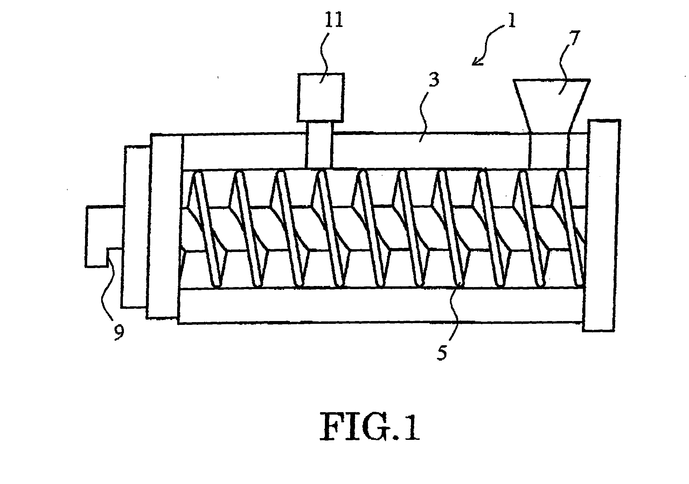

Fig. 1 is a schematic configuration diagram showing an example of apparatus wherein a processing according to the present invention of a urethane resin is carried out.

### DETAILED DESCRIPTION OF THE INVENTION

In what follows, the present invention will be specifically explained with reference to embodiments according to the invention.

### [First embodiment of the invention]

In the first embodiment, a resin composition is obtained by addition-condensation of a compound having an unsaturated carbon bond to a decomposed product of a urethane resin.

That is, when a urethane resin is decomposed with a known decomposing agent, though there is a difference depending on the decomposing agent, a decomposed product whose main components are amines and polyol is generated. In conventional recycle methods, these functional groups have been made use of to recycle a resin. However, as amines generated during decomposition act as a catalyst when reacting with an epoxy group and an isocyanate group, the recycle has been difficult. In the embodiment, an unsaturated carbon bond is addition condensed into a urethane decomposed product, followed by radically reacting the double bond by use of heat or a reaction initiator to polymerize, and thereby enabling to use as a recycle resin.

In what follows, the embodiments will be detailed.

### (Processed urethane resin)

As a urethane resin appropriate for processing in the embodiment and utilizing as a recycled resin raw material, any urethane resin, as far as it has a urethane bond or a urea bond, can be used. Examples of the urethane resin include rigid urethane resin, flexible urethane resin, semi-rigid urethane resin and urethane resin oligomer. Among these, rigid urethane resin that generates amine a lot during decomposition is preferable. The hard urethane resin is defined here as a urethane having a hydroxyl value of a raw material polyol of 250 mg KOH/g and more. Furthermore, an isocyanurate material having an isocyanurate bond is included, and can be used similarly to a urethane resin. Applications thereof include, for example, heat insulation materials for refrigerators and building materials. In the invention, a decomposed product obtained by chemically decomposing these urethane resins is used as a raw material of a resin composition.

### (Method of decomposing a urethane resin)

As methods of chemically decomposing urethane resins, such methods as a chemical decomposing method using a decomposing agent, a hydrolysis method, and a thermal decomposition method can be cited. In applying to the embodiment, decomposed product generated by any decomposition method can be used as far as an amino group (-NH₂) or a hydroxyl group (-OH) is generated during the decomposition process. When decomposition methods other than chemical decomposition method are taken, in some cases, a processing speed tends to be slow and stable quality cannot be obtained. Accordingly, the chemical decomposition method is advantageous in practicing. Examples of decomposing agent used in the chemical decomposition method include amines, polyols, esters, organic acids, acid anhydrides, isocyanate, an epoxy resin, and supercritical water. Among these, a decomposing agent containing amines or polyols higher in the reactivity is favorable. The types of usage thereof include such as an amine compound being singularly used; a polyol compound or a metallic alcoholate of polyol being singularly used; and a mixture of an amine compound and a polyol compound or a metallic alcoholate of polyol being used. Examples of amine compounds used include such as monoethanolamine, diethanolamine, triethanolamine, ethylenediamine, tetramethylenediamine, hexamethylenediamine, propanediamine, 2-ethylhexylamine, isopropanolamine, 2-(2-aminoethylamino)ethanol, 2-amino-2-hydroxymethy-1, 3-propanediol, ethylamino ethanol, aminobutanol, n-propylamine, di-n-propylamine, n-amylamine, isobutylamine, methyldiethylamine, cyclohexylamine, piperazine, piperidine, aniline, toluidine, benzylamine, phenylenediamine, xylylenediamine, chloroaniline, pyridine, picoline, N-methylmorpholine, ethylmorpholine and pyrazole. Examples of polyol compounds include such as ethylene glycol, dietylene glycol, propylene glycol, trimethylene glycol, 1, 4-butanediol, 1, 5-pentadiol, 1, 6-hexanediol, polyoxyethylene glycol, polyoxypropylene glycol, glycerin, and polyethylene glycol. Furthermore, as needs arise, an additive can be added to these compounds. Examples of the additives include diluents such as water and alcohol, fillers such as inorganic particles and organic particles, and any substance that does not extremely disturb a reaction of the compounds can be added. Still furthermore, a decomposition temperature is preferably in the range of 120 to 300 degree centigrade, and more preferably in the range of 200 to 280 degree centigrade. When the temperature is lower than this, the decomposition reaction becomes slower to be commercially unfavorable, and when the temperature is higher than this, thermal decompositions arise too much to control the reaction.

### (Apparatus for decomposing a urethane resin)

As apparatus and processing apparatus appropriately used for decomposing a urethane resin in the embodiment, any of known apparatus for decomposing can be used. As particularly preferable apparatus, it is desirable to use apparatus that can perform heating, blending and compression at the same time. When an extruder 1 such as shown in Fig. 1 is used to process, processing can be carried out continuously and efficiently. The extruder 1 has a cylinder potion 3 with a heater capable of controlling a temperature, a rotation-controllable screw 5 that internally comes into contact with an inner wall of the cylinder potion 3, a input slot 7 located at one end of the cylinder potion 3, a discharging potion 9 located at the other end of the cylinder potion 3, and a supply potion 11 located between the input slot 7 and the vent 9. The heater at the cylinder potion 3 can be set so that a temperature of the cylinder potion 3 may be locally different, and, for example, the heating temperature before and after the supply potion 11 can be differentiated. When, with the temperature of the cylinder potion 3 set at a decomposition temperature of a urethane resin and a revolving speed of the screw 5 set so that a time during which a charge of the extruder proceeds from the input slot 7 to the supply potion 11 by rotation of the screw 5 may be in time to meet a time necessary for the decomposition of a urethane resin, a urethane resin and a decomposing agent are charged from the charging slot 7, the urethane resin begins decomposing and moves toward the discharging slot 9. When a treatment agent is added to the urethane resin decomposed product from the supply potion 11, finally, the urethane resin becomes liquid and is discharged from the discharging slot 9.

### (Addition-condensation of a compound having an unsaturated carbon bond)

To decomposed product obtained by decomposing according to the above method, an organic acid, an acid anhydride, an epoxy resin, or an isocyanate having an unsaturated carbon bond is reacted, and a resin raw material is obtained. Processing agents other than these do not react with both of a hydroxyl group and an amino group present in the decomposed product and a component that does not have an unsaturated carbon bond is unfavorably formed. Among these, organic acids and acid anhydrides are particularly preferably used because these are easy to procure and cheap. Examples of such processing agents include acrylic acid, methacrylic acid, crotonic acid, maleic acid, methylmaleic acid, fumaric acid, oleic acid, propiolic acid, itaconic acid, citraconic acid, chloromaleic aicd, methyltetrahydrophtalic acid and acid anhydrides thereof. Among these, maleic acid, fumaric acid, acrylic acid, methacrylic acid, methyltetrahydrophtalic acid and acid anhydrides thereof are particularly preferable. An addition amount of the processing agent is preferably in the range of 0.5 to 1.5 equivalent weight relative to 1 equivalent weight of a hydroxyl group and an amino group that are present in the decomposed product. More preferably, the amount of the processing agent added is in the range of 0.75 to 1.2 equivalent weight. In calculating an equivalent weight, a hydroxyl value according to JIS K1557 is used. According to the measuring method, since a reaction equivalent with phthalic anhydride is calculated, it is possible to calculate a total equivalent weight of hydroxyl groups and amino groups. A molecular weight per 1 mole of functional groups is calculated by a molecular weight = 1000/(hydroxyl value/56.11). (Here, 56.11 here is a molecular weight of calcium hydroxide).

Furthermore, by reasons of controlling the cross-linking density and so on, carboxylic acid, acid anhydride, isocyanate and an epoxy resin having no unsaturated carbon bond can be added. Examples of carboxylic acid and acid hydrides include formic acid, acetic acid, propionic acid, butyric acid, oxalic acid, malonic acid, succinic acid, adipic acid, sebacic acid, phthalic acid, terephthalic acid, pyromellitic acid, trimellitic acid and anhydrates thereof. When the compounds are added too much, a polymerization reaction later on is influenced. Accordingly, it is advisable to keep an addition amount thereof 50 parts by weight or less relative to 100 parts by weight of the decomposed product.

A temperature where a compound having the unsaturated carbon bond is reacted with a urethane decomposed product is preferably in the range of 60 to 250 degree centigrade or less, and more preferably, in the range of 120 to 200 degree centigrade. Because the reaction becomes too slow to have the practicality, it is not preferable to allow reacting at a temperature equal to or less than 60 degree centigrade. Furthermore, because there is the likelihood of the unsaturated carbon bonds being cut to start polymerization, it is not preferable to carry out the reaction at a temperature equal to or higher than 250 degree centigrade. Still furthermore, when a decomposing agent that is solid at room temperature is used, it is advisable to carry out the reaction at a temperature equal to or higher than the melting point thereof. When the melting point is high, the reaction may be carried out after a urethane decomposed product and compound are dissolved in a solvent. Though any solvent can be used here, since polar solvents such as dimethylacetamide and N-methyl-2-pyrrolidone well dissolve the urethane decomposed product, these can be particularly preferably used.

### (Cross-linking agent and reaction initiator)

After reacting with carboxylic acid or acid anhydride with a double bond, in order to crosslink these and obtain a recycled resin, a cross-linking agent and a reaction initiator are added. However, without particularly adding the cross-linking agent, the resin can be manufactured. As an example of the cross-linking agent, styrene is most preferable because it is cheap and balanced in the physical properties. Examples of the cross-linking agent other than it include vinyltoluene, α-methylstyrene, methyl methacrylate, vinyl acetate, acrylonitrile, allyl acetate, o-chlorostyrene, p-chlorostyrene, 2, 5-dichlorostyrene, diethyl chloromaleate, diethyl fumarate, diethyl maleate, dimethyl fumarate, dimethyl maleate, monoethyl fumarate, monoethyl maleate, methyl acrylate, vinyl carbazole, dibenzyl maleate, poly 1, 3-bytyrene glycol fumarate, 4-vinyl pyridine, allyl acetate, polyethylene glycol fumarate, diallyl phthalate, diallyl isophthalate, triallyl isocyanulate, diallyl tetrabromophthalate and epoxy acrylate. Other than these, acrylic ester monomer such as phenoxyethyl acrylate, 1, 6-hexanediol diacrylate, trimethylolpropane triacrylate, 2-hydroxyethyl acrylate, TMP-triacrylate, penta-triacrylate, ethylene glycol diacrylate, tetraethylene glycol diacrylate, polyethylene glycol diacrylate, neopentyl glycol diacrylate, triacryloxyethyl phosphate, hydroxypicrate neopentyl glycol diacrylate, vinyl pyrrolidone, 2, hydroxyethyl (meth)acrylate, 2, hydroxypropyl (meth)acrylate, tetrahydrofurfuryl acrylate, butoxyethyl acrylate, ethyldiethylene glycol acrylate, 2, ethylhexyl acrylate, cyclohexyl acrylate, pehnoxyethyl acrylate, 2, hydro-3, phenyloxypropyl acrylate and dicyclopentadiene acrylate can be cited. Furthermore, as the cross-linking agent, carboxylic acid or an acid anhydride with a double bond mentioned above can be used. These compounds may be used in combination.

Still furthermore, as a reaction initiator, any compound that can advance a radical polymerization can be used, and peroxide is a typical example thereof. Examples of the reaction initiator include methyl ethyl ketone peroxide, cyclohexanone peroxide, methyl acetoacetate peroxide, acetyl acetone peroxide, cumene hydroperoxide, dicumyl peroxide, benzoyl peroxide, t-butyl peroxybenzoate, t-butylpetoxy pivalate, and t-butylperoxy-2-ethylhexanoate. These compounds can be used in combination. Furthermore, when acrylic ester monomer is being used as a cross-linking agent, ultraviolet light can be irradiated instead of a reaction initiator. What is more, the reaction can be initiated by generating a radical with application of heat.

### (Method of curing a resin composition)

To cure the resin composition, the reaction is carried out at a temperature of room temperature to 250 degree centigrade. However, in the case the curing being carried out by generating a radical with application of heat, it is advisable to carry out at a temperature equal to or higher than 150 degree centigrade. The time period of the reaction is, though it depends on the temperature, in the range of a few minutes to substantially over night. Though there is no need of particular apparatus to be prepared for manufacturing a recycled resin, in the case of a forming material is manufactured by filling particles and fibers, a compressing machine such as a press can be used. Additionally, in the case of a recycled resin being used as a raw material of a coating material, it may be used blended with alcohol, ester, ether, ketone, amide, or the like. As for the applications thereof, a forming material, FRP, a coating material and an adhesive agent can be cited.

### [Second embodiment of the invention]

In this embodiment, a urethane resin is decomposed by use of a decomposing agent having an unsaturated bond, and a decomposed product thereof is used as a resin composition. In what follows, the embodiment will be detailed. However, in the present embodiment, a urethane resin being processed, apparatus for decomposing the urethane resin, a cross-linking agent and a reaction initiator, or a manufacturing method of a recycled resin are identical to those in the first embodiment, detailed explanation thereabout is omitted here.

### (Method for decomposing a urethane resin)

A decomposing agent used in the embodiment is a known decomposing agent with an unsaturated carbon bond. More specifically, for instance, amines, polyols, esters, organic acids, inorganic anhydrides, isocyanate, epoxy resins, that is, ones having a unsaturated carbon bond can be cited. Among these, organic acids, acid anhydrides, isocyanate and epoxy resins that react with amine and polyol derived from a raw material generated during the decomposition of the urethane resin are prrferable. Furthermore, in view of procuring the raw material, organic acids and acid anhydrides are more preferable. Kinds thereof include acrylic acid, methacrylic acid, crotonic acid, maleic acid, methylmaleic acid, fumaric acid, oleic acid, propiolic acid, itaconic acid, citraconic acid, chloromaleic acid, methyltetrahydrophtalic acid and acid anhydrides thereof. Among these, maleic acid, fumaric acid, acrylic acid, methacrylic acid and methyltetrahydrophtalic acid are particularly preferable. These substances may be used blended each other. Furthermore, as needs arise, amines, polyols and organometals may be added as an auxiliary agent of decomposition. An amount of these substances added is in the range of 0.1 to 3 parts by weight relative to 1 part by weight of the urethane resin. The decomposition is then carried out. It is preferable to carry out the decomposition at a temperature in the range of 100 to 250 degree centigrade, and more preferably, at a temperature in the range of 120 to 200 degree centigrade. When the decomposition is carried out at a temperature higher than this, the unsaturated carbon bond is cut and a polymerization among the decomposing agent may be generated. When the decomposition is carried out at a temperature lower than this necessitates too much time for decomposing, and thus it is not preferable.

A decomposed product obtained in this way is, similar to the first embodiment, blended with a cross-linking agent and a reaction initiator, and used as a resin composition. As a curing method or the resin composition, the method explained in the first embodiment can be applied.

### [Third embodiment of the invention]

When a urethane resin is decomposed by use of a known decomposing agent or heat, though there are differences depending on the decomposing agent, in an existing reproducing method where a decomposed product mainly made of amines and polyols is generated, by making use of the reactivity of these functional groups and an isocyanate group or an epoxy group, the urethane resin is recycled to urethane or an epoxy resin. In the invention, in the curing of the urethane resin decomposed product, a compound having a carboxyl group or an anhydride thereof is used to react, instead of using the isocyanate group and the epoxy group.

In what follows, the embodiment will be detailed. In the embodiment, since a urethane resin being processed and apparatus for decomposing a urethane resin are identical to those explained in the first embodiment, detailed explanation thereabout is omitted here.

### (Method for decomposing a urethane resin)

Examples of methods of chemically decomposing a urethane resin include a chemical decomposing method wherein a decomposing agent is used, a hydrolysis method, and a thermal decomposition method. As to application of the embodiment, decomposed product undergone any of the decomposition methods as far as it generates an amino group (-NH₂) or a hydroxyl group (-OH) during the decomposition can be used. Among these, the decomposition using an amine compound is particularly preferable, because, many amino groups are present in the decomposed product and well react with a compound having a carboxyl group. Examples of amine compounds include monoethanolamine, diethanolamine, triethanolamine, ethylene diamine, tetramethylene diamine, hexamethylene diamine, propanediamine, 2-ethylhexylamine, isopropanolamine, 2-(2-aminoethylamino)ethanol, 2-amino-2-hydroxymethyl-1, 3-propanediol, ethylamino ethanol, aminobutanol, n-propylamine, di-n-propylamine, n-amylamine, isobutylamine. methyldiethyleneamine, cyclohexylamine, piperazine, piperidine, aniline, toluidine, benzylamine, phenylenediamine, xylylenediamine, chloroaniline, pyridine, picoline, N-methylmorpholine, ethylmorpholine and pyrazole. Furthermore, a decomposition temperature is preferably in the range of 120 to 300 degree centigrade, and more preferably in the range of 200 to 280 degree centigrade. When the temperature is lower than this, the speed of the decomposition reaction becomes too slow to be commercially applicable. When the temperature is higher than this, the thermal decomposition becomes so much that the control of the reaction becomes difficult.

### (Manufacturing methods of a compound having a carboxyl group or an acid anhydride, and a resin composition)

To a urethane resin decomposed product obtained through the decomposition according to the above method, a compound having two or more carboxyl groups or an anhydride thereof is reacted, and thereby a resin raw material is obtained. Examples of such processing agents include orthophthalic acid, isophthalic acid, terephthalic acid, tetrahydrophthalic acid, hexahydrophthalic acid, endomethylenetetrahydrophthalic acid, tetrachlorophthalic acid, tetrabromophthalic acid, nitrophthalic acid, malonic acid, oxalic acid, glutaric acid, succinic acid, pimelic acid, adipic acid, azelaic acid, sebacic acid, suberic acid, 1, 12-dodecane diacid, himic acid, het acid, 2, 6-naphthalenedicarboxylic acid, 2, 7-naphthalenedicarboxylic acid, 4, 4'-biphenyldicarboxylic acid, pyromellitic acid, trimellitic acid, and the anhydrides thereof. Two or more kinds may be used in combination. An amount of these compounds added is in the range of 20 to 200 parts by weight of compounds relative to 100 parts by weight of a resin. When the addition amount is more than or less than this, too much unreactant may remain for the resin to become solid. Furthermore, when a calculation is possible, it is advisable to add a processing agent in the range of 0.3 to 1.5 equivalent weight relative to 1 equivalent weight of amino groups and hydroxyl groups (hereafter, referred to as a functional group) present in the decomposed product. More preferably, it is added in the range of 0.75 to 1.2 equivalent weight. In calculating the equivalent weight, hydroxyl values according to JIS K1557 are used. According to the measuring method, since a reaction equivalent with phthalic anhydride is calculated, it is possible to calculate a total equivalent weight of hydroxyl groups and amino groups. A molecular weight per 1 mole of functional groups is calculated by a molecular weight = 1000/(hydroxyl value/56.11). (Here, 56.11 here is a molecular weight of calcium hydroxide).

### (Method for manufacturing a reproduced resin)

It is preferable to carry out the reaction with a urethane decomposition at a temperature in the range of 60 to 250 oc less degree centigrade, and more preferably, in the range of 120 to 220 degree centigrade. When the decomposition is carried out at a temperature equal to or lower than 60 degree centigrade, since water generated with the reaction is hard to evaporate and the reaction becomes unfavorably slow. Furthermore, when the reaction is carried out at a temperature of 250 degree centigrade or more, the urethane decomposed product is unfavorably likely to be thermally decomposed. Still furthermore, when a solid decomposing agent is used at room temperature, it is advisable to carry out the reaction at a temperature higher than its melting point. In the case of the melting point being high, after the urethane decomposed product and a processing agent are dissolved in a solvent, the reaction may be carried out. In this case, any solvent can be used, and a substance that can dissolve a urethane decomposed product and a processing agent can be chosen from water, alcohol, ether, ester, ketone and amide.

### [Applications of a reproduced resin]

To a new resin obtained through the first to the third embodiments, as needs arise, various kinds of additives such as filler, glass fiber, a coloring agent, an accelerator, and a mold release agent can be blended and the mixture thereof can be used as a forming material. In the filler, other than various kinds of inorganic fillers such as silica and alumina, such as metal powder, wood flour, waste paper, a waste resin, a shell, sand, and a concrete waste material can be cited, and from a forming material in which such fillers are blended, various kinds of boards, tiles, and bricks can be manufactured. Furthermore, when a coloring agent, an accelerator and a solvent are blended, the mixture can be used as paint. Examples of coloring agent include red ocher, titanium white and carbon. As the solvent, water, alcohol, ether, ester, ketone, amide, and a cross-linking agent such as styrene can be cited. When these are coated on a base material and dried to cure, they can be used as a coating material.

### Example

In what follows, the invention will be detailed with reference to examples.

Furthermore, a urethane resin used hereinafter is one described below.

### [Urethane resin A]

A urethane resin used as a heat insulating material of a refrigerator: a hydroxyl value of polyol of 450 mg KOH/g, a content of isocyanate (NCO) = 31.4%

### (Example 1)

By use of apparatus schematically shown in Fig. 1, a urethane resin A was decomposed with diethanolamine (hereinafter, referred to as DEA) as a decomposing agent. A cylinder potion 3 was heated to a temperature of 250 degree centigrade, then through a input slot 7, three parts by weight of a urethane resin and one parts by weight of DEA were simultaneously and continually put into the apparatus. A blown viscous liquid was obtained from a discharging slot 9. When a hydroxyl value is measured based on JIS K 1557, it was 604 mg KOH/g, and an equivalent weight with maleic anhydride was a decomposition/maleic anhydride = 100/93. (Hereinafter, the decomposed product is referred to as a urethane decomposed product A).

To 100g of the urethane decomposed product, 100g of maleic anhydride was added, and a mixture thereof was blended and heated in a separable flask of 1L to react. After a reaction at 100 degree centigrade for 1 hr, it was gradually heated to a temperature of 150 degree centigrade and kept there for further 2 hr. When it was cooled down to room temperature, a blown transparent solid substance was obtained. (Hereinafter, the solid substance is referred to as a processed product A). When the solid substance was heated on a hot plate at a temperature of 200 degree centigtade, it gelated and a gel time was 7 min and 37 sec.

### (Examples 2 to 5)

Except that amounts of maleic anhydride added were changed, recycled resin raw materials were manufactured under the similar conditions as example 1. States of the processed products after reaction and gel time thereof at 200 degree centigrade are shown in Table 1. According to the table, it is found that the state of the processed product becomes best when the reaction is carried out with the amount of maleic anhydride equivalent to that of the processed product.

### [Table 1]

### (Example 6)

The urethane decomposition A manufactured in example 1 and maleic anhydride were put into a test tube at a weight ratio of 1/l, followed by putting into an oil bath set at 180 degree centigrade to heat and thereby to react. After 15 min of the reaction, when taken out of the test tube and followed by cooling to room temperature, a blown transparent solid substance was obtained. When the gel time of the processed product was measured at 200 degree centigrade, it was found to be 7 min 20 sec.

### (Examples 7 to 16)

Except that a reaction time was changed, under the same conditions, maleic anhydride was reacted similarly to example 6 (examples 7 and 8).

Furthermore, a temperature of the oil bath was set at 150 degree centigrade, and various kinds of processed products were manufactured by changing a reaction time (examples 9 to 16).

States of the respective processed products as well as the gel times thereof at 200 degree centigrade are shown in Table 2. According to the table, it is found that, after carrying out the reaction for 15 min or more at 180 degree centigrade, or for 1 hr or more at 150 degree centigrade, a solid processed product can be obtained at room temperature. Furthermore, it is also found that, when the reaction time is extended, the gel time at 200 degree centigrade can be decreased.

### [Table 2]

### (Example 17)

The urethane resin A and maleic anhydride were put into a test tube at a weight ratio of 1/1.5, followed by putting into an oil bath heated at 180 degree centigrade. The urethane had been completely decomposed after 25 min, and the decomposed product was heated further for 10 min. After it was taken out, a blown solid substance at room temperature was obtained. When it was heated on a hot plate set at 200 degree centigrade, it gelated and the gel time thereof was 9 min 20 sec.

### (Example 18)

After 20 parts by weight of the processed product A obtained in example 1 was blended with 20 pacts by weight of N-methyl-2-pyrrolidone as a solvent, a mixture was coated on a glass plate. After heating for 30 min in an oven heated at 180 degree centigrade, a resin coating film in which a urethane resin decomposed product was used was obtained.

### (Example 19)

After 20 parts by weight of the processed product A obtained in example 1 and 6 parts by weight of styrene and 0.1 part by weight of dicumyl peroxide were blended with 20 parts by weight of N-methyl-2-pyrrolidone, a mixture was coated on a glass plate. When it was heated for 1 hr in an oven set at 150 degree centigrade, a resin coating film in which decomposed product of urethane resin was used was obtained.

### (Example 20)

When 68 parts by weight of acrylic acid was added to 100 parts by weight of the urethane decomposition A obtained in example 1, followed by heating at 150 degree centigrade for 30 min, a blown viscous liquid was obtained. After 20 parts by weight of the liquid, 20 parts by weight of N-methyl-2-pyrrolidone and 0.1 parts by weight of dicumyl peroxide were blended, a mixture thereof was coated on a glass plate. When it was heated for 30 min in an oven heated at 180 degree centigrade, a resin coating film in which the urethane resin decomposed product was used was obtained.

### (Example 21)

When 108 parts by weight of acryl glycidyl ether was added to 100 parts by weight of the urethane decomposed product A obtained in example 1 and a mixture thereof was heated for 30 min at 150 degree centigrade, a blown viscous liquid was obtained. After 20 parts by weight of the liquid, 20 parts by weight of N-methyl-2-pyrrolidone and 0.1 parts by weight of dicumyl peroxide were blended, a mixture thereof was coated on a glass plate. When it was heated for 30 min in an oven heated at 180 degree centigrade, a resin coating film in which the urethane resin decomposed product was used was obtained.

### (Example 22)

After 10 parts by weight of the processed product A obtained in example 1 and 40 parts by weight of the sawdust of red pine were blended by means of a Henschel mixer, compression molding was applied to a mixture thereof at 200 degree centigrade by use of a press machine. After it was heated for 10 min, a particleboard in which the urethane decomposed product was used was obtained.

### (Example 23)

After 50 parts by weight of the processed product A and 30 parts by weight of grit whose particle diameter is in the range of 0.1 to 2 cm, compression molding to a mixture thereof was carried out by use of a press machine heated at 200 degree centigrade. After it was heated for 10 min, a recycle board in which the urethane decomposed product was used was obtained.

### (Example 24)

By use of the apparatus schematically shown in Fig.1, the urethane resin A was decomposed with diethanolamine (hereinafter, referred to as DEA) as a decomposing agent. After a cylinder part 3 was heated to 250 degree centigrade, three parts by weight of the urethane resin and one parts by weight of DEA were simultaneously and continually put into a charging slot 7. A blown viscous liquid was obtained from a discharging slot 9. A hydroxyl value thereof was, when measured according to JIS K 1557, 604 mg KOH/g, and an equivalent weight with succinic anhydride was the decomposition/succinic anhydride = 100/93.

### (Hereinafter, the decomposed product is referred to as a urethane decomposed product B).

After 100 g of succinic anhydride was added to 100 g of the urethane decomposed product, a mixture thereof was heated and blended in a separable flask of 10, and thereby a reaction was carried out. After the reaction was carried out at 100 degree centigrade for 1 hr, it was gradually heated to 150 degree centigrade and kept there for further 2 hr. After it was cooled to room temperature, a blown transparent solid substance was obtained. (Hereinafter, it is referred to as a processed product B). After the solid substance is melted, it was thinly coated on a glass plate and heated on a hot plate at 200 degree centigrade. After 1 hr, it was cured and a blown resin coating film was obtained.

### (Examples 25 to 28)

With various kinds of acid, experiments similar to example 24 were carried out. Equivalent ratios were regulated so as to be substantially equal. The names of acid used, mixing ratios (equivalent ratio), and the colors and states of the cured products are shown in Table 3. It was found that, in the case of any acid being used, excellent cured products could be obtained.

### [Table 3]

### (1):

### (Examples 29 to 34, and comparative examples 1 and 2)

A recycled resin was manufactured similarly as example 24 except that an amount of succinic anhydride was changed. Furthermore, as comparative examples, compositions whose equivalent ratio differ much from that of the decomposed product (equivalent weight = 0.15 and 1.75) were also manufactured and used as comparative examples. These are shown together with example 24 in Table 4. from the table, more excellent cured products were obtained when the equivalent weight of succinic anhydride was in the range of 0.75 to 1.25. Though the curing occurred in the range of equivalent weight of succinic acid of 0.3 to 1.5, however, it did not occur outside thereof.

### [Table 4]

### (Example 35)

After 20 parts by weight of the processed product B obtained in example 24 and 20 parts by weight of cyclohexane as a solvent were blended, the mixture was coated on a glass plate. When it was heated on a hot plate heated at 200 degree centigrade for 60 min, a resin coating film in which the urethane resin decomposed product was used was obtained.

### (Example 36)

Ten parts by weight of the processed product B obtained in example 24 was heated at 200 degree centigrade for 40 min to increase the viscosity. After 10 parts by weight of a pulverized sample thereof and 40 parts by weight of the sawdust of red pine were blended by use of a Henschel mixer, followed by compression molding by use of a press machine heated at 200 degree centigrade. After heating for 15 min, a particleboard in which the urethane resin decomposed product was used was obtained.

### (Example 37)

Similarly to the method shown in example 1, the urethane resin A and DEA were put into an extruder at a ratio of 1 part by weight of DEA relative to 10 parts by weight of the urethane resin A, and thereby a urethane decomposed product was obtained. When a hydroxyl value was measured, it was 343 mg KOH/g, and an equivalent weight with maleic acid was the decomposition/maleic acid = 100/60. After 100 parts by weight of the obtained decomposed product, 60 parts by weight of maleic acid and 500 parts by weight of wood flour were blended by use of a Henschel mixer, a mixture thereof was molded with a press machine heated at 180 degree centigrade. After 15 min, a recycle board in which the urethane resin decomposed product was used was obtained.

### INDUSTRIAL APPLICABILITY

According to a resin composition of the invention, by use of a urethane resin decomposed product, a recycled resin excellent in the characteristics can be conveniently obtained.

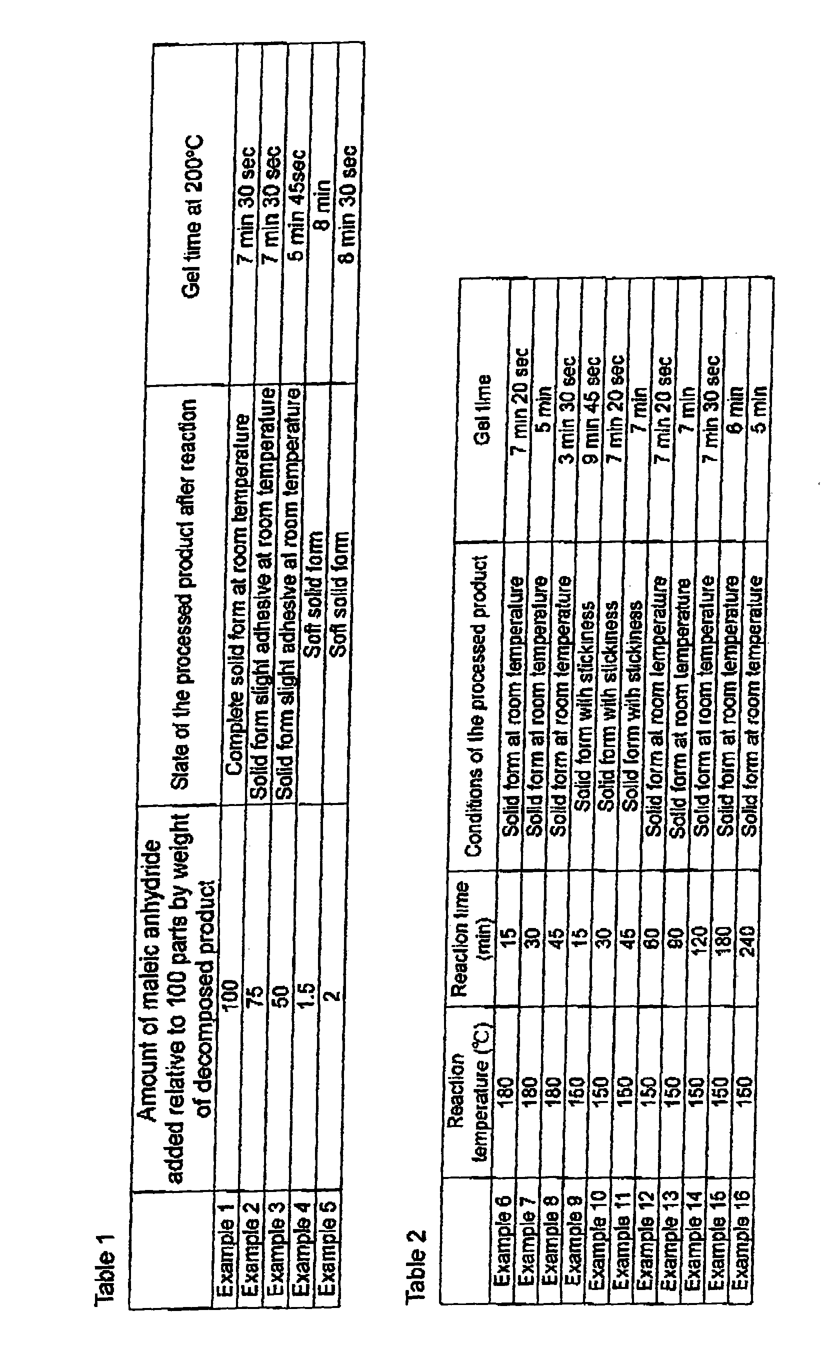

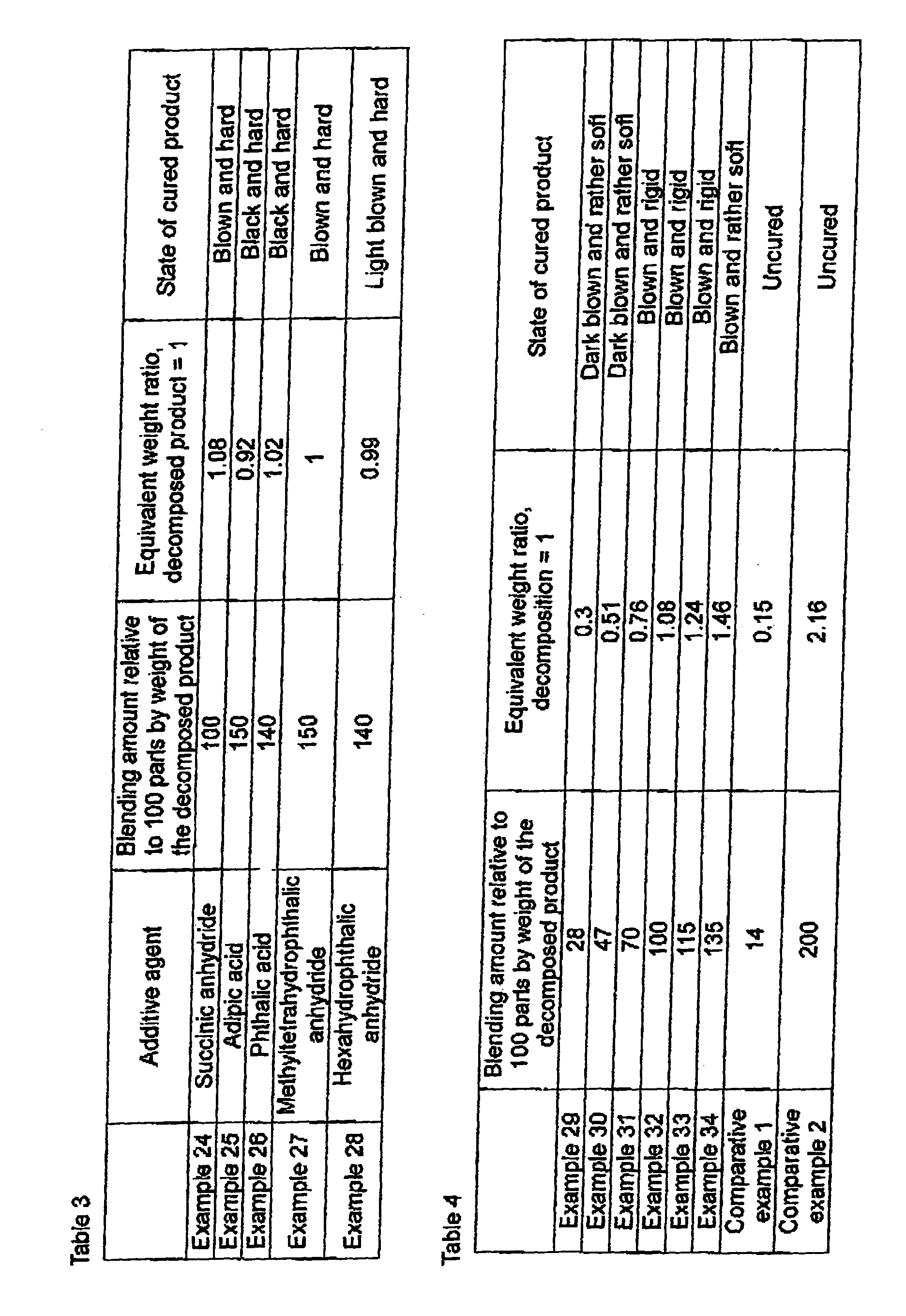

## Claims

1. A resin composition having a urethane resin as a starting raw material, **characterized by** including a reaction product obtained through addition-condensation of a compound having an unsaturated carbon bond to a resin decomposed product obtained by chemically decomposing the urethane resin.

2. The resin composition according to claim 1, **characterized in that** the compound having an unsaturated carbon bond is carboxylic acid having an unsaturated carbon bond and an ester thereof or a salt thereof, an acid anhydride, an epoxy resin, or an isocyanate compound.

3. The resin composition according to claim 1, **characterized in that** the carboxylic acid having an unsaturated carbon bond and an ester thereof or a salt thereof is one or more kinds of compounds selected from maleic acid, fumaric acid, acrylic acid, methacrylic acid, crotonic acid, methylmaleic acid, oleic acid, propiolic acid, itaconic acid, citraconic acid, chloromaleic acid, methyltetrahydrophthalic acid and acid anhydrides thereof.

4. The resin composition according to claim 3, **characterized in that** the carboxylic acid having an unsaturated carbon bond is maleic anhydride or methyltetcahydrophthalic anhydride.

5. A resin composition having a urethane resin as a starting raw material, **characterized by** including a decomposed product obtained by decomposing a urethane resin with a decomposing agent having an unsaturated carbon bond in a molecule.

6. The resin composition according to claim 5, **characterized in that** the decomposing agent having an unsaturated carbon bond in a molecule is one or more kinds of compounds selected from maleic anhydride, maleic acid, fumaric acid, acrylic acid, acrylic anhydride, methacrylic acid, methacrylic anhydride, and methyltetrahydrophthalic anhydride.

7. The resin composition according to claim 6, **characterized in that** the anhydride of a compound having two or more carboxyl groups is maleic anhydride or methylterrahydrophthalic anhydride.

8. A method of manufacturing a resin composition having a urethane resin as a starting raw material, **characterized by** decomposing a urethane resin with a decomposing agent having an unsaturated carbon bond.

9. The method of manufacturing a resin composition according to claim 8, **characterized in that** the decomposing agent having an unsaturated bond is one or more kinds of compounds selected from maleic anhydride, maleic acid, fumaric acid, acrylic acid, acrylic anhydride, methacrylic acid and methacrylic anhydride.

10. The method of manufacturing a resin composition according to claim 9, **characterized in that** the decomposing agent having an unsaturated carbon bond is maleic anhydride or methyltetrahydrophthalic anhydride.

11. A resin composition having a urethane resin as a starting raw material, **characterized by** blending and reacting a compound having two or more carboxyl groups or an anhydride thereof to a resin decomposed product obtained by decomposing the urethane resin.

12. The resin composition according to claim 11, **characterized in that** an addition amount of the compound having two or more carboxylic groups or an anhydride thereof is, with respect to 100 parts by weight of the resin decomposed product obtained by decomposing a urethane resin, in the range of 20 to 200 parts by weight.

13. The resin composition according to claim 11, **characterized in that** the resin decomposed product is one obtained by decomposing with amines.

14. The resin composition according to claim 11, **characterized in that** the resin decomposed product is one obtained by decomposing urethane having a hydroxyl value of 250 mg KOH/g.

15. A method of manufacturing a resin composition having a urethane resin as a starting raw material, **characterized by** decomposing a urethane resin with amines or polyol followed by reacting with a compound having a carboxyl group or an anhydride thereof.

16. The method of manufacturing a resin composition according to claim 15, **characterized in that** the compound having a carboxyl group or an anhydride thereof is phthalic anhydride or succinic anhydride.

17. A coating material that uses a resin composition of which starting raw material is a urethane resin, **characterized in that** at least one of a composition comprising a reaction product obtained through addition-condensation of a compound having an unsaturated carbon bond to a resin decomposed product obtained by chemically decomposing a urethane resin, a composition comprising a decomposed product obtained by decomposing a urethane resin with a decomposing agent having an unsaturated carbon bond in a molecule and a composition obtained by blending and reacting a compound having two or more carboxyl groups or an anhydride thereof to a resin decomposed product obtained by decomposing a urethane resin is a main component, and a pigment and a solvent are added thereto.

18. A forming material that uses a resin composition of which starting raw material is a urethane resin, **characterized by** including as a main component at least one of a composition comprising a reaction product obtained through addition-condensation of a compound having an unsaturated carbon bond to a resin decomposed product obtained by chemically decomposing a urethane resin, a composition comprising a decomposed product obtained by decomposing a urethane resin with a decomposing agent having an unsaturated carbon bond in a molecule and a composition obtained by blending and reacting a compound having two or more carboxyl groups or an anhydride thereof to a resin decomposed product obtained by decomposing a urethane resin.
